# EUROPEAN PATENT APPLICATION

(11) **EP 4 528 976 A1**
(43) Date of publication of application: **26.03.2025**
(21) Application number: 23849095.7
(22) Date of filing: 28.06.2023
(51) Int. Cl.: H02J 9/06, H02M 3/158

(54) **POWER SUPPLY CIRCUIT, CONTROL METHOD THEREFOR, AND ELECTRONIC DEVICE**

(30) Priority: 04.08.2022 CN 202210931368
(71) Applicant: Huawei Technologies Co., Ltd., Shenzhen, Guangdong 518129 (CN)
(72) Inventor: WANG, Shuhui, Shenzhen, Guangdong 518129 (CN); HU, Shengzhe, Shenzhen, Guangdong 518129 (CN)
(74) Representative: MERH-IP Matias Erny Reichl Hoffmann Patentanwälte PartG mbB
(86) International application number: PCT/CN2023/103307
(87) International publication number: WO 2024/027385

(57) **Abstract**

Embodiments of this application provide a power supply circuit, a control method therefor, and an electronic device, and relate to the field of power supply technologies, to improve flexibility of a power supply, so as to extend an applicable scenario of the power supply. The power supply circuit includes: a first voltage converter; a second voltage converter; a first low dropout regulator, where an output end of the first low dropout regulator is electrically connected to a first load end; and a multiplexing module, where the multiplexing module is configured to: connect, based on a power-on state and a power-off state of the second voltage converter, one of an output end of the first voltage converter and an output end of the second voltage converter to the first load end through the first low dropout regulator.

## Description

This application claims priority to Chinese Patent Application No. 202210931368.4, filed with the China National Intellectual Property Administration on August 4, 2022 and entitled "POWER SUPPLY CIRCUIT, CONTROL METHOD THEREFOR, AND ELECTRONIC DEVICE", which is incorporated herein by reference in its entirety.

### TECHNICAL FIELD

This application relates to the field of power supply technologies, and in particular, to a power supply circuit, a control method therefor, and an electronic device.

### BACKGROUND

In an electronic device like a communication device, a function and performance of a chip are gradually enhanced, which means that complexity of the chip increases to some extent. Types of power supply domains of the chip also increase, and a power supply structure becomes more complex. For a power supply solution, more power supplies are combined, and more combined power supplies indicate lower flexibility. How to further extend an applicable scenario of the power supply becomes an urgent problem to be resolved.

### SUMMARY

A power supply circuit, a control method therefor, and an electronic device are provided, to improve flexibility of a power supply, so as to extend an applicable scenario of the power supply.

According to a first aspect, a power supply circuit is provided, including: a first voltage converter; a second voltage converter; a first low dropout regulator, where an output end of the first low dropout regulator is electrically connected to a first load end; and a multiplexing module, where the multiplexing module is configured to: connect, based on a power-on state and a power-off state of the second voltage converter, one of an output end of the first voltage converter and an output end of the second voltage converter to the first load end through the first low dropout regulator. The power supply circuit in this embodiment of this application can switch, by using the multiplexing module, a corresponding voltage converter based on the power-on state and the power-off state of the second voltage converter, to supply power to the first load end, to adapt to different scenarios. This improves flexibility of a power supply.

In a possible implementation, the multiplexing module is specifically configured to: when the second voltage converter is in the power-off state, disconnect the output end of the second voltage converter from the first load end and connect the output end of the first voltage converter to the first load end. The multiplexing module is further specifically configured to: when the second voltage converter is in the power-on state, connect the output end of the second voltage converter to the first load end and disconnect the output end of the first voltage converter from the first load end. In a standby mode, the first voltage converter is in a power-on state, and the second voltage converter is in the power-off state. In this case, the multiplexing module disconnects the output end of the second voltage converter from the first load end, and connects the output end of the first voltage converter to the first load end through the first low dropout regulator. In this case, the first voltage converter supplies power to a first load and a third load, that is, it is ensured that the first load is not powered off in the standby mode. In addition, because the output end of the second voltage converter and the first load are disconnected, the second voltage converter is powered off, and a second load is powered off, so that electric leakage of the power supply to the second load does not occur. This reduces a problem of electric leakage to a load in the standby mode, decreases a bottom current in the standby mode, and decreases power consumption.

In a possible implementation, when the second voltage converter is in the power-on state, an output voltage of the second voltage converter is V1, and an output voltage of the first voltage converter is V2, where V1<V2. In a non-standby mode, the output voltage of the first voltage converter is greater than the output voltage of the second voltage converter. Therefore, the multiplexing module controls the second voltage converter to cooperate with the first low dropout regulator to supply power to the first load, so that the first low dropout regulator has high efficiency. However, in the standby mode, the second voltage converter is powered off. Therefore, the multiplexing module controls the first voltage converter to cooperate with the first low dropout regulator to supply power to the first load, to ensure that the first load is not powered off in the standby mode, and that electric leakage of the second voltage converter to another load does not occur.

In a possible implementation, in a first time period, the first voltage converter is in the power-on state, and the second voltage converter is in the power-on state; and in a second time period, the first voltage converter is in the power-on state, and the second voltage converter is in the power-off state.

In a possible implementation, the power supply circuit further includes: a second load end, where the second load end is electrically connected to the output end of the second voltage converter; a third low dropout regulator, where an input end of the third low dropout regulator is electrically connected to the output end of the first voltage converter, and an output end of the third low dropout regulator is electrically connected to a third load end; and a fourth low dropout regulator, where an input end of the fourth low dropout regulator is electrically connected to the output end of the second voltage converter, and an output end of the fourth low dropout regulator is electrically connected to a fourth load end.

In a possible implementation, the multiplexing module includes: a first switch module, where a first end of the first switch module is electrically connected to the output end of the first voltage converter, and a second end of the first switch module is electrically connected to the first load end; a second switch module, where a first end of the second switch module is electrically connected to the output end of the second voltage converter, and a second end of the second switch module is electrically connected to the first load end; and a control circuit, where the control circuit is configured to: turn off the first switch module when the second voltage converter is in the power-on state, and turn off the second switch module when the second voltage converter is in the power-off state.

In a possible implementation, the multiplexing module and the first low dropout regulator are integrated into one chip, and the control circuit of the multiplexing module is reused as a control circuit of the first low dropout regulator.

In a possible implementation, the multiplexing module includes: a first switch module, where the first switch module is connected in series between an input end of the first low dropout regulator and the output end of the first voltage converter; and a second switch module, where the second switch module is connected in series between the input end of the first low dropout regulator and the output end of the second voltage converter. The multiplexing module is specifically configured to: when the second voltage converter is in the power-on state, turn off the first switch module and turn on the second switch module; and when the second voltage converter is in the power-off state, turn off the second switch module and turn on the first switch module.

In a possible implementation, the turning off the second switch module when the second voltage converter is in the power-off state includes: turning off the second switch module when a voltage at the output end of the second voltage converter is less than a first threshold, where the first threshold is less than V1, and V1 is the output voltage of the second voltage converter when the second voltage converter is in the power-on state.

In a possible implementation, the turning off the first switch module when the second voltage converter is in the power-on state includes: turning off the first switch module when the voltage at the output end of the second voltage converter is equal to V1.

In a possible implementation, the turning off the first switch module when the voltage at the output end of the second voltage converter is equal to V1 includes: when the voltage at the output end of the second voltage converter is equal to V1, turning off the first switch module after preset duration t.

In a possible implementation, the power supply circuit further includes a voltage detection circuit. The voltage detection circuit is configured to detect the voltage at the output end of the second voltage converter. The control circuit is electrically connected to the voltage detection circuit. The control circuit is specifically configured to: turn off the second switch module when the voltage that is at the output end of the second voltage converter and that is detected by the voltage detection circuit is less than the first threshold, and turn off the first switch module when the voltage that is at the output end of the second voltage converter and that is detected by the voltage detection circuit is equal to V1.

In a possible implementation, both the first voltage converter and the second voltage converter are buck converters.

According to a second aspect, a control method of a power supply circuit is provided. The power supply circuit includes: a first voltage converter; a second voltage converter; and a first low dropout regulator, where an output end of the first low dropout regulator is electrically connected to a first load end. The control method includes: connecting, based on a power-on state and a power-off state of the second voltage converter, one of an output end of the first voltage converter and an output end of the second voltage converter to the first load end through the first low dropout regulator.

In a possible implementation, a process of connecting, based on a power-on state and a power-off state of the second voltage converter, one of an output end of the first voltage converter and an output end of the second voltage converter to the first load end through the first low dropout regulator includes: when the second voltage converter is in the power-off state, disconnecting the output end of the second voltage converter from the first load end and connecting the output end of the first voltage converter to the first load end; and when the second voltage converter is in the power-on state, connecting the output end of the second voltage converter to the first load end and disconnecting the output end of the first voltage converter from the first load end.

In a possible implementation, in a first time period, the first voltage converter is in a power-on state, and the second voltage converter is in the power-on state; and in a second time period, the first voltage converter is in the power-on state, and the second voltage converter is in the power-off state.

In a possible implementation, when the second voltage converter is in the power-on state, an output voltage of the second voltage converter is V1, and an output voltage of the first voltage converter is V2, where V1<V2.

In a possible implementation, the disconnecting the output end of the second voltage converter from the first load end and connecting the output end of the first voltage converter to the first load end, when the second voltage converter is in the power-off state includes: when a voltage at the output end of the second voltage converter is less than a first threshold, disconnecting the output end of the second voltage converter from the first load end and connecting the output end of the first voltage converter to the first load end, where the first threshold is less than V1.

In a possible implementation, the connecting the output end of the second voltage converter to the first load end and disconnecting the output end of the first voltage converter from the first load end, when the second voltage converter is in the power-on state includes: when the voltage at the output end of the second voltage converter is equal to V1, connecting the output end of the second voltage converter to the first load end and disconnecting the output end of the first voltage converter from the first load end, where V1 is greater than the first threshold.

In a possible implementation, the connecting the output end of the second voltage converter to the first load end and disconnecting the output end of the first voltage converter from the first load end, when the voltage at the output end of the second voltage converter is equal to V1 includes: when the voltage at the output end of the second voltage converter is equal to V1, after preset duration, connecting the output end of the second voltage converter to the first load end and disconnecting the output end of the first voltage converter from the first load end.

In a possible implementation, the multiplexing module includes: a first switch module, where a first end of the first switch module is electrically connected to the output end of the first voltage converter, and a second end of the first switch module is electrically connected to the first load end; and a second switch module, where a first end of the second switch module is electrically connected to the output end of the second voltage converter, and a second end of the second switch module is electrically connected to the first load end. A process of disconnecting the output end of the second voltage converter from the first load end includes: turning off the second switch module. A process of disconnecting the output end of the first voltage converter from the first load end includes: turning off the first switch module.

According to a third aspect, a chip is provided, including a processor and a memory. The memory is configured to store program instructions, and the processor is configured to execute the program instructions in the memory, to implement the foregoing method.

According to a fourth aspect, an electronic device is provided, including the foregoing power supply circuit.

According to a fifth aspect, a power supply circuit is provided, including: a first voltage converter; a second voltage converter; a first low dropout regulator, where an output end of the first low dropout regulator is electrically connected to a first load end; and a multiplexing module, where the multiplexing module is configured to: connect, based on an output current of the first low dropout regulator, one of an output end of the first voltage converter and an output end of the second voltage converter to the first load end through the first low dropout regulator. The multiplexing module may switch a corresponding voltage converter based on the output current of the first low dropout regulator, to supply power to the first load end, to adapt to different scenarios. This improves flexibility of a power supply.

In a possible implementation, an output voltage of the first voltage converter is greater than an output voltage of the second voltage converter. The multiplexing module is specifically configured to: connect the output end of the first voltage converter to the first load end when an output current of the first low dropout regulator is less than a first current threshold; and connect the output end of the second voltage converter to the first load end when the output current of the first low dropout regulator is greater than a second current threshold, where the second current threshold is greater than or equal to the first current threshold. Because the first load has a high requirement on quality of the power supply in a case of a small current, and has a low requirement on the quality of the power supply in a case of a large current, when the output current of the first low dropout regulator is small, the first low dropout regulator is switched to be powered by the first voltage converter with a high output voltage, to improve quality of the first low dropout regulator. In this case, the current is small, and overall power consumption is low even if a power supply voltage is high. When the output current of the first low dropout regulator is large, the first low dropout regulator is switched to be powered by the second voltage converter with a low output voltage. Because the requirement on the quality of the power supply is low in the case of the large current, when the requirement on the quality of the power supply in the case of the large current is met, decreasing the power supply voltage can effectively improve power efficiency of the low dropout regulator and reduce power consumption.

In a possible implementation, the output voltage of the first voltage converter is greater than the output voltage of the second voltage converter. The multiplexing module includes: a first switch module, where a first end of the first switch module is electrically connected to the output end of the first voltage converter, and a second end of the first switch module is electrically connected to the first load end; a second switch module, where a first end of the second switch module is electrically connected to the output end of the second voltage converter, and a second end of the second switch module is electrically connected to the first load end; and a control circuit, where the control circuit is configured to: turn off the second switch module when the output current of the first low dropout regulator is less than the first current threshold, and turn off the first switch module when the output current of the first low dropout regulator is greater than the second current threshold, where the second current threshold is greater than or equal to the first current threshold.

According to a sixth aspect, a power supply circuit is provided, including: a first voltage converter; a second voltage converter; a first low dropout regulator, where an output end of the first low dropout regulator is electrically connected to a first load end; and a multiplexing module. Operating time periods of the power supply circuit sequentially include a first time period and a second time period. The multiplexing circuit is configured to: connect an output end of the first voltage converter to the first load end through the first low dropout regulator in the first time period; and connect an output end of the second voltage converter to the first load end through the first low dropout regulator in the second time period. In the first time period, the first voltage converter is in a power-on state, and the second voltage converter is in a power-off state. In the second time period, the first voltage converter is in the power-on state, and the second voltage converter is in a power-on state. If a load connected to the first load end needs to be powered on before a load powered by the second voltage converter, but the second voltage converter needs to supply power to the first low dropout regulator due to another reason, in a power-on process of a power supply, the first low dropout regulator may be first switched to be powered by the powered-on first voltage converter, and after the second voltage converter is powered on, the first low dropout regulator is switched to be powered by the second voltage converter.

In a possible implementation, the multiplexing module includes: a first switch module, where a first end of the first switch module is electrically connected to the output end of the first voltage converter, and a second end of the first switch module is electrically connected to the first load end; a second switch module, where a first end of the second switch module is electrically connected to the output end of the second voltage converter, and a second end of the second switch module is electrically connected to the first load end; and a control circuit, where the control circuit is configured to: turn off the second switch module in the first time period, and turn off the first switch module in the second time period.

According to a seventh aspect, a computer-readable storage medium is provided. The computer-readable storage medium stores program code, and when the program code is executed by a processor, the foregoing method is implemented.

### BRIEF DESCRIPTION OF DRAWINGS

FIG. 1 is a schematic of a power supply circuit in a related technology;
FIG. 2 is a schematic of another power supply circuit in a related technology;
FIG. 3 is a schematic of a power supply circuit according to an embodiment of this application;
FIG. 4 is a schematic of another power supply circuit according to an embodiment of this application;
FIG. 5 is a schematic of another power supply circuit according to an embodiment of this application;
FIG. 6 is a diagram of a specific structure of a first low dropout regulator and a multiplexing module according to an embodiment of this application;
FIG. 7 is a diagram of timing of a power supply circuit according to an embodiment of this application; and
FIG. 8 is a diagram of another specific structure of a first low dropout regulator and a multiplexing module according to an embodiment of this application.

### DESCRIPTION OF EMBODIMENTS

Terms used in embodiments of this application are only used to explain specific embodiments of this application, but are not intended to limit this application.

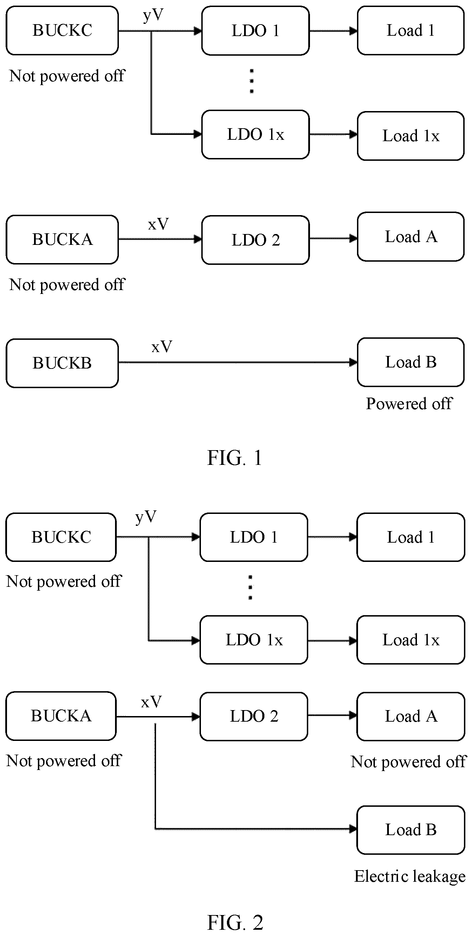

Before embodiments of this application are described, a related technology is first described. FIG. 1 is a schematic of a power supply circuit in the related technology. The power supply circuit includes buck converters and low dropout regulators (Low Dropout Regulators, LDOs). The buck converters are respectively a BUCKA, a BUCKB, and a BUCKC. An output end of the BUCKC is electrically connected to a plurality of LDOs, including an LDO 1 to an LDO 1x. The LDO 1 to the LDO 1x respectively drive a load 1 to a load 1x. An output end of the BUCKA is electrically connected to an LDO 2. The LDO 2 drives a load A, and the BUCKB directly drives a load B. The BUCKA and the BUCKC are not powered off in a standby mode, and the BUCKB is powered off in the standby mode, so that the load B is powered off in the standby mode. In a non-standby mode, an output voltage of the BUCKC is yV, and output voltages of the BUCKA and the BUCKB are both xV The power supply circuit has a low integration level, and requires a large quantity of components. To improve integration of the power supply circuit and reduce the quantity of components, a manner in which loads are combined for supplying power may be used. FIG. 2 is a schematic of another power supply circuit in a related technology. It can be learned from comparison between FIG. 2 and FIG. 1 that: A structure of the power supply circuit in FIG. 2 is a circuit that is obtained, based on the structure in FIG. 1, by combining loads for supplying power. Because the output voltages of the BUCKA and the BUCKB in FIG. 1 are the same, the BUCKB is removed, and the BUCKA supplies power to both the load A and the load B. In this way, a circuit structure shown in FIG. 2 may be obtained. In the circuit structure shown in FIG. 2, although the quantity of components is reduced, a new problem is caused. In the standby mode, because the load A needs not to be powered off, the BUCKA also needs not to be powered off. In this case, even if the load B is turned off, because the BUCKA is not powered off, electric leakage may occur on the load B due to an output of the BUCKA. Consequently, a bottom current in the standby mode is increased, that is, power consumption is increased. To resolve the foregoing problem, technical solutions in embodiments of this application are provided. The following describes embodiments of this application.

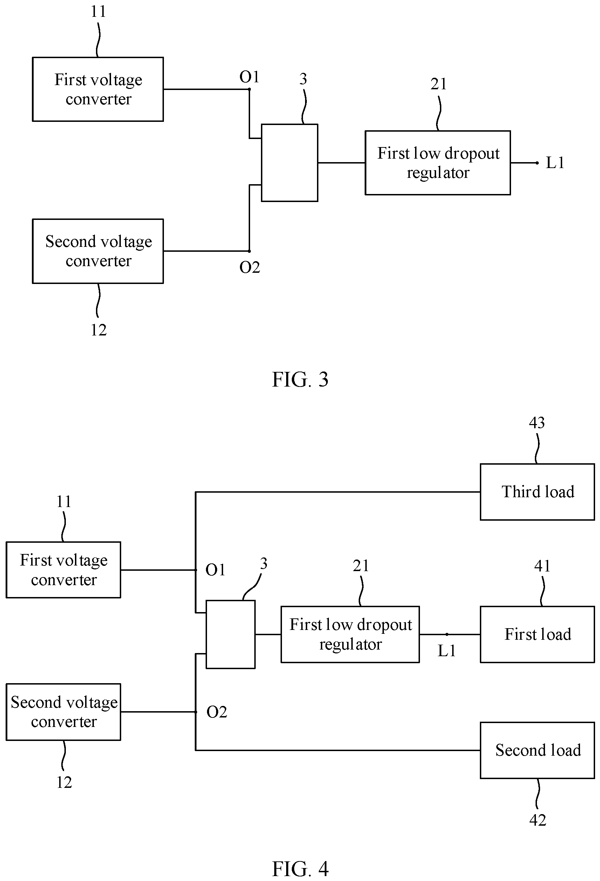

As shown in FIG. 3, an embodiment of this application provides a power supply circuit, including: a first voltage converter 11; a second voltage converter 12; a first low dropout regulator 21, where an output end of the first low dropout regulator 21 is electrically connected to a first load end L1, and the first load end L1 is configured to electrically connect to a first load (not shown in FIG. 3); and a multiplexing module 3, where the multiplexing module 3 is configured to connect, based on a power-on state and a power-off state of the second voltage converter 12, one of an output end O1 of the first voltage converter 11 and an output end O2 of the second voltage converter 12 to the first load end L1 through the first low dropout regulator 21.

Specifically, when the output end O1 of the first voltage converter 11 and the first load end L1 are connected through the first low dropout regulator 21, the output end O2 of the second voltage converter 12 and the first load end L1 are disconnected. In this case, the first voltage converter 11 may supply power to the first load end L1. When the output end O1 of the first voltage converter 11 and the first load end L1 are disconnected, the output end O2 of the second voltage converter 12 and the first load end L1 are connected through the first low dropout regulator 21. In this case, the second voltage converter 12 may supply power to the first load end L1. In the foregoing process, the multiplexing module 3 controls switching. To be specific, the multiplexing module 3 may control, based on the power-on state and the power-off state of the second voltage converter 12, to select one of the first voltage converter 11 and the second voltage converter 12 to supply power to the first load end L1.

The power supply circuit in this embodiment of this application can switch, by using the multiplexing module, a corresponding voltage converter based on the power-on state and the power-off state of the second voltage converter, to supply power to the first load end, to adapt to different scenarios. This improves flexibility of a power supply.

In a possible implementation, the multiplexing module 3 is specifically configured to: when the second voltage converter 12 is in the power-off state, disconnect the output end O2 of the second voltage converter 12 from the first load end L1 and connect the output end O1 of the first voltage converter 11 to the first load end L1. The multiplexing module 3 is further specifically configured to: when the second voltage converter 12 is in the power-on state, connect the output end O2 of the second voltage converter 12 to the first load end L1 and disconnect the output end O1 of the first voltage converter 11 from the first load end L1.

Specifically, for example, as shown in FIG. 4, it is assumed that the output end O2 of the second voltage converter 12 is further electrically connected to a second load 42. It should be noted that a specific electrical connection manner between the output end O2 of the second voltage converter 12 and the second load 42 is not limited in embodiments of this application. FIG. 4 shows only a manner in which the output end O2 of the second voltage converter 12 is directly electrically connected to the second load 42. In another possible implementation, the output end O2 of the second voltage converter 12 may alternatively be electrically connected to the second load 42 through another low dropout regulator. The output end O1 of the first voltage converter 11 is further electrically connected to a third load 43. Similarly, FIG. 4 shows only a manner in which the output end O1 of the first voltage converter 11 is directly electrically connected to the third load 43. In another possible implementation, the output end O1 of the first voltage converter 11 may alternatively be electrically connected to the third load 43 through another low dropout regulator. The second load 42 is a load that is powered off in a standby mode, and both the third load 43 and the first load 41 are loads that are not powered off in the standby mode. It can be learned that, in a non-standby mode, the first voltage converter 11 is in the power-on state, and the second voltage converter 12 is in the power-on state. In this case, the multiplexing module 3 controls the output end O2 of the second voltage converter 12 and an input end of the first low dropout regulator 21 to be connected, that is, connects the output end O2 of the second voltage converter 12 to the first load end L1, and controls the output end O1 of the first voltage converter 11 and the input end of the first low dropout regulator 21 to be disconnected, that is, disconnects the output end O1 of the first voltage converter 11 from the first load end L1. In this case, the first voltage converter 11 supplies power to the third load 43, and the second voltage converter 12 supplies power to the first load 41 and the second load 42. However, in the standby mode, the first voltage converter 11 is in the power-on state, and the second voltage converter 12 is in the power-off state. In this case, the multiplexing module 3 disconnects the output end O2 of the second voltage converter 12 from the input end of the first low dropout regulator 21, that is, disconnects the output end O2 of the second voltage converter 12 from the first load end L1, and connects the output end O1 of the first voltage converter 11 to the input end of the first low dropout regulator 21, that is, connects the output end O1 of the first voltage converter 11 to the first load end L1. In this case, the first voltage converter 11 supplies power to the first load 41 and the third load 43, that is, it is ensured that the first load 41 is not powered off in the standby mode. In addition, because the output end O2 of the second voltage converter 12 and the first load 41 are disconnected, the second voltage converter 12 is powered off, and the second load 42 is powered off. Therefore, electric leakage of the power supply to the second load 42 does not occur. This reduces a problem of electric leakage to a load in the standby mode, decreases a bottom current in the standby mode, and decreases power consumption, that is, meets requirements of high integration and low power consumption of the power supply circuit.

In a possible implementation, in a first time period, the first voltage converter 11 is in the power-on state, and the second voltage converter 12 is in the power-on state. The first time period is a time period corresponding to the non-standby mode. For example, as shown in FIG. 4, in this time period, the first load 41, the second load 42, and the third load 43 that are driven by the first voltage converter 11 and the second voltage converter 12 are not powered off, and operate normally. In a second time period, the first voltage converter 11 is in the power-on state, and the second voltage converter 12 is in the power-off state. The second time period is a time period corresponding to the standby mode. In this time period, the second voltage converter 12 is powered off, and the second load 42 correspondingly driven by the second voltage converter 12 is powered off. The first voltage converter 11 is not powered off, and the third load 43 correspondingly driven by the first voltage converter 11 is not powered off. In addition, the multiplexing module 3 is switched to connect the output end O1 of the first voltage converter 11 to the first load end L1. Therefore, the first voltage converter 11 drives the first load 41 through the first low dropout regulator 21, so that the first load 41 is not powered off in either the first time period or the second time period.

In a possible implementation, when the second voltage converter 12 is in the power-on state, an output voltage of the second voltage converter 12 is V1, and an output voltage of the first voltage converter 11 is V2, where V1<V2.

Specifically, for a low dropout regulator, efficiency of the low dropout regulator is related to a voltage difference between an input and an output. A smaller voltage difference between the input and the output indicates higher efficiency. In the non-standby mode, the output voltage of the first voltage converter 11 is greater than the output voltage of the second voltage converter 12. Therefore, the multiplexing module 3 controls the second voltage converter 12 to cooperate with the first low dropout regulator 21 to supply power to the first load 41, so that the first low dropout regulator 21 has high efficiency. In the standby mode, the second voltage converter 12 is powered off. Therefore, the multiplexing module 3 controls the first voltage converter 11 to cooperate with the first low dropout regulator 21 to supply power to the first load 41, to ensure that the first load 41 is not powered off in the standby mode, and that electric leakage of the second voltage converter 12 to another load does not occur.

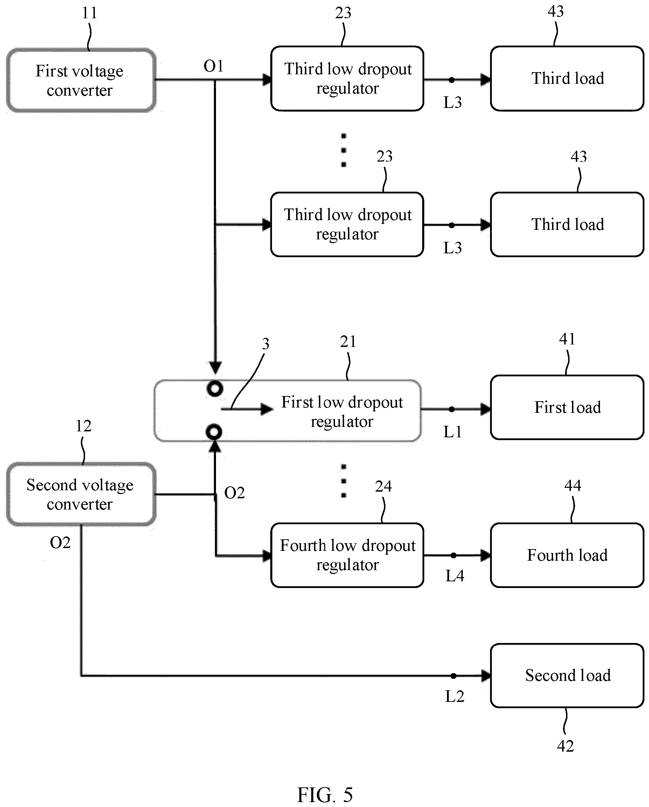

In a possible implementation, as shown in FIG. 5, the power supply circuit further includes: a second load end L2, where the second load end L2 is electrically connected to the output end O2 of the second voltage converter 12, it should be noted that FIG. 5 shows a case in which the output end O2 of the second voltage converter 12 is led out from two positions, and actually a same output end is led out from the two positions; a third low dropout regulator 23, where an input end of the third low dropout regulator 23 is electrically connected to the output end O1 of the first voltage converter 11, an output end of the third low dropout regulator 23 is electrically connected to a third load end L3, and the third load end L3 is configured to electrically connect to the third load 43; and a fourth low dropout regulator 24, where an input end of the fourth low dropout regulator 24 is electrically connected to the output end O2 of the second voltage converter 12, an output end of the fourth low dropout regulator 24 is electrically connected to a fourth load end L4, and the fourth load end L4 is configured to electrically connect to a fourth load 44.

Specifically, there may be a plurality of third low dropout regulators 23 and a plurality of fourth low dropout regulators 24. That is, the first voltage converter 11 may separately supply power to a plurality of third loads 43 through the plurality of third low dropout regulators 23, and the second voltage converter 12 may separately supply power to a plurality of fourth loads 44 through the plurality of fourth low dropout regulators 24. A specific operating process of a structure shown in FIG. 5 is similar to that in FIG. 4. In the non-standby mode, the first voltage converter 11 is in the power-on state, and the second voltage converter 12 is in the power-on state. In this case, the multiplexing module 3 controls the output end O2 of the second voltage converter 12 and the first load end L1 to be connected, and controls the output end O1 of the first voltage converter 11 and the first load end L1 to be disconnected, that is, the first voltage converter 11 supplies power to the third load 43, and the second voltage converter 12 supplies power to the first load 41, the second load 42, and the fourth load 44. However, in the standby mode, the first voltage converter 11 is in the power-on state, and the second voltage converter 12 is in the power-off state. In this case, the multiplexing module 3 disconnects the output end O2 of the second voltage converter 12 from the first load end L1, and connects the output end O1 of the first voltage converter 11 to the first load end L1. In this case, the first voltage converter 11 supplies power to the first load 41 and the third load 43, that is, it is ensured that the first load 41 is not powered off in the standby mode. In addition, because the output end O2 of the second voltage converter 12 and the first load 41 are disconnected, the second voltage converter 12 is powered off, and the second load 42 and the fourth load 44 are powered off, so that electric leakage of the power supply to the second load 42 and the fourth load 44 does not occur. This reduces a problem of electric leakage to a load in the standby mode, decreases a bottom current in the standby mode, and decreases power consumption.

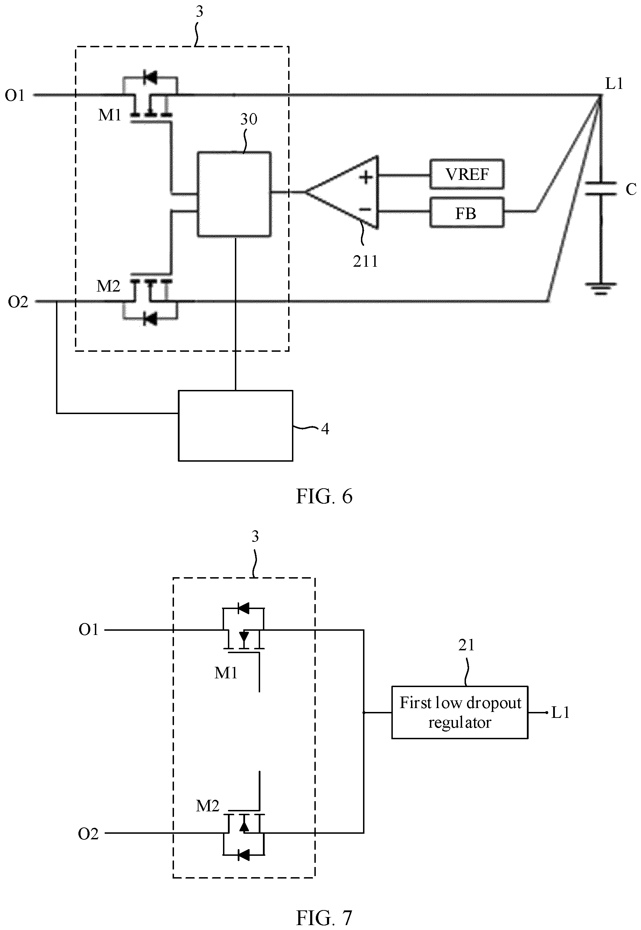

In a possible implementation, FIG. 6 is a diagram of a specific structure of the first low dropout regulator and the multiplexing module in FIG. 3, FIG. 4, or FIG. 5. The multiplexing module 3 includes: a first switch module M1, where a first end of the first switch module M1 is electrically connected to the output end O1 of the first voltage converter 11, and a second end of the first switch module M1 is electrically connected to the first load end L1; and a second switch module M2, where a first end of the second switch module M2 is electrically connected to the output end O2 of the second voltage converter 12, and a second end of the second switch module M2 is electrically connected to the first load end L1. The first low dropout regulator 21 includes: an operational amplifier 211, where a first input end of the operational amplifier 211 is electrically connected to a reference voltage end VREF, and a second input end of the operational amplifier 211 is electrically connected to the first load end L1 through a feedback circuit FB; and a capacitor C, where the capacitor C is electrically connected to the first load end L1. The multiplexing module 3 further includes a control circuit 30. The control circuit 30 is electrically connected to a control end of the first switch module M1, a control end of the second switch module M2, and an output end of the operational amplifier 211, and the first switch module M1, the second switch module M2, and the control circuit 30 are reused as a part of the first low dropout regulator. The control circuit 30 is configured to: turn off the first switch module M1 when the second voltage converter 12 is in the power-on state. In this case, the output end O2 of the second voltage converter 12 and the first load end L1 are connected, that is, the second switch module M2, the control circuit 30, the operational amplifier 211, the feedback circuit FB, and the capacitor C are used as the first low dropout regulator 21, and the second switch module M2 operates based on feedback control of the operational amplifier 211, to implement a function of the second switch module M2. When the second voltage converter 12 is in the power-off state, the second switch module M2 is turned off. In this case, the output end O1 of the first voltage converter 11 and the first load end L1 are connected, that is, the first switch module M1, the control circuit 30, the operational amplifier 211, the feedback circuit FB, and the capacitor C are used as the first low dropout regulator 21, and the first switch module M1 operates based on feedback control of the operational amplifier 211, to implement a function of the first switch module M1.

Specifically, the reference voltage end VREF is configured to provide a reference voltage for the first input end of the operational amplifier 211, the feedback circuit FB is configured to feed back a voltage at the first load end L1 to the operational amplifier 211, the feedback circuit FB may include, for example, a voltage divider resistor, and the capacitor C is connected in series between the first load end L1 and a ground end. For example, in the non-standby mode, the first voltage converter 11 is in the power-on state, and the second voltage converter 12 is in the power-on state. In this case, the control circuit 30 converts an output signal of the operational amplifier 211 and outputs a signal obtained through conversion to the control end of the second switch module M2. In this case, the second switch module M2, the control circuit 30, the operational amplifier 211, the feedback circuit FB, and the capacitor C are used as the first low dropout regulator 21, that is, the output end O2 of the second voltage converter 12 and the first load end L1 are connected through the first low dropout regulator 21. In addition, the control circuit 30 outputs a turn-off voltage to the control end of the first switch module M1, to turn off the first switch module M1, that is, disconnect the output end O1 of the first voltage converter 11 from the first load end L1. However, in the standby mode, the first voltage converter 11 is in the power-on state, and the second voltage converter 12 is in the power-off state. In this case, the control circuit 30 converts the output signal of the operational amplifier 211 and outputs the signal obtained through conversion to the control end of the first switch module M1. In this case, the first switch module M1, the control circuit 30, the operational amplifier 211, the feedback circuit FB, and the capacitor C are used as the first low dropout regulator 21, that is, the output end O1 of the first voltage converter 11 and the first load end L1 are connected through the first low dropout regulator 21. In addition, the control circuit 30 outputs a turn-off voltage to the control end of the second switch module M2, to turn off the second switch module M2, that is, disconnect the output end O2 of the second voltage converter 12 from the first load end L1. In the foregoing structure, the multiplexing module 3 is reused as a part of the first low dropout regulator 21, and the two switch modules are controlled, so that the control circuit 30 may select one of the first switch module M1 and the second switch module M2 to cooperate with the control circuit 30 and another component to form the first low dropout regulator. In this way, gating between the input end of the first low dropout regulator and O1 or O2 can be implemented.

In a possible implementation, as shown in FIG. 6, the multiplexing module 3 and the first low dropout regulator 21 are integrated into one chip, and the control circuit 30 of the multiplexing module 3 is reused as a control circuit of the first low dropout regulator 21. In other words, when the second voltage converter 12 is in the power-on state, the control circuit 30 is configured to turn off the first switch module M1, and the control circuit 30 is further configured to control the control end of the second switch module M2 based on the output signal of the operational amplifier 211, to be specific, the control circuit 30 converts an output voltage of the operational amplifier 211 into a control voltage of the second switch module M2, and outputs the voltage to the control end of the second switch module M2, to implement feedback control of the second switch module M2. When the second voltage converter 12 is in the power-off state, the control circuit 30 is configured to turn off the second switch module M2, and the control circuit 30 is further configured to control the control end of the first switch module M1 based on the output signal of the operational amplifier 211, to be specific, the control circuit 30 converts the output voltage of the operational amplifier 211 into a control voltage of the first switch module M1, and outputs the voltage to the control end of the first switch module M1, to implement feedback control of the first switch module M1.

In addition to the manner shown in FIG. 6 in which the multiplexing module is reused as a part of a low dropout regulator to enable gating between the input end of the first low dropout regulator and output ends of different voltage converters, the first low dropout regulator may alternatively be designed to have a same structure as a conventional linear regulator, and switching is implemented by using the multiplexing module other than the first low dropout regulator. In a possible implementation, FIG. 7 is a diagram of another specific structure of the first low dropout regulator and the multiplexing module in FIG. 3, FIG. 4, or FIG. 5. The multiplexing module 3 includes: a first switch module M1, where the first switch module M1 is connected in series between an input end of the first low dropout regulator 21 and the output end O1 of the first voltage converter 11; and a second switch module M2, where the second switch module M2 is connected in series between the input end of the first low dropout regulator 21 and the output end O2 of the second voltage converter 12. The multiplexing module 3 is specifically configured to: when the second voltage converter 12 is in the power-on state, turn off the first switch module M1, that is, disconnect the output end O1 of the first voltage converter 11 from the first load end L1, and turn on the second switch module M2, that is, connect the output end O2 of the second voltage converter 12 to the first load end L1 through the first low dropout regulator 21, and when the second voltage converter 12 is in the power-off state, turn off the second switch module M2, that is, disconnect the output end O2 of the second voltage converter 12 from the first load end L1, and turn on the first switch module M1, that is, connect the output end O1 of the first voltage converter 11 to the first load end L1 through the first low dropout regulator 21.

In a possible implementation, as shown in FIG. 6, FIG. 7, and FIG. 8, that the second switch module M2 is turned off when the second voltage converter 12 is in the power-off state includes: When a voltage at the output end O2 of the second voltage converter 12 is less than a first threshold VA, turning off the second switch module M2, that is, connecting the output end O1 of the first voltage converter 11 to the first load end L1, and disconnecting the output end O2 of the second voltage converter 12 from the first load end L1, where the first threshold VA is less than V1. When the voltage at O2 drops below the first threshold VA, it indicates that the output voltage of the second voltage converter 12 drops to a specific extent, that is, the second voltage converter 12 is being powered off. Therefore, switching may be performed in advance, to ensure power supply to the first load end L1.

Specifically, the first threshold VA may be determined based on a voltage jitter that can be tolerated by the first load and corresponding loop time. For example, if a voltage change that can be tolerated by the first load is 30 mV, and loop response time approximately ranges from 10 µs to 20 µs, the first threshold VA may be set to V1 to 30 mV.

In a possible implementation, as shown in FIG. 6, FIG. 7, and FIG. 8, that the first switch module M1 is turned off when the second voltage converter 12 is in the power-on state includes: When the voltage at the output end O2 of the second voltage converter 12 is equal to V1, turning off the first switch module M1, that is, connecting the output end O2 of the second voltage converter 12 to the first load end L1, and disconnecting the output end O1 of the first voltage converter 11 from the first load end L1. When the voltage at the output end O2 of the second voltage converter 12 rises to V1, it indicates that the second voltage converter 12 is powered on again. Therefore, the first load end L1 is switched to be powered by the second voltage converter 12, to improve efficiency of the first low dropout regulator.

In a possible implementation, as shown in FIG. 6, FIG. 7, and FIG. 8, that the first switch module M1 is turned off when the voltage at the output end O2 of the second voltage converter 12 is equal to V1 includes: when the voltage at the output end O2 of the second voltage converter 12 is equal to V1, turning off the first switch module M1 after preset duration t.

Specifically, when the voltage at O2 rises to V1, switching is performed after the preset duration t, to supply power to the first load after the voltage at the output end O2 of the second voltage converter 12 is restored and stabilized. In addition, in another possible implementation, another factor may also be considered for the preset duration t. For example, waiting may be performed to stagger power-on timing of another low dropout regulator. The preset duration t may be specifically set based on a soft-start characteristic of the second voltage converter 12. For example, the preset duration is duration obtained by multiplying soft-start time of the second voltage converter 12 by 30%.

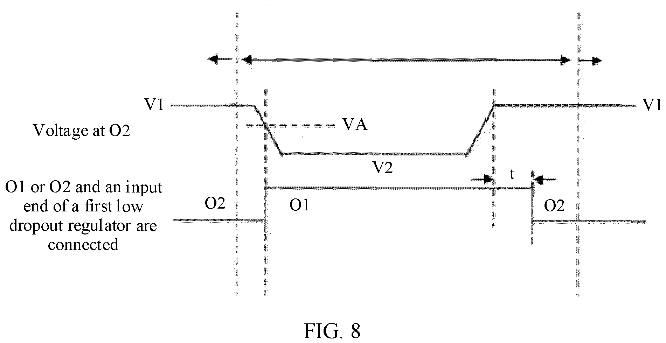

In a possible implementation, as shown in FIG. 6 and FIG. 8, the power supply circuit further includes a voltage detection circuit 4. The voltage detection circuit 4 is configured to: detect the voltage at the output end O2 of the second voltage converter 12, and output the voltage to the multiplexing module 3. The control circuit 30 is electrically connected to the control end of the first switch module M1, the control end of the second switch module M2, the output end of the operational amplifier 211, and the voltage detection circuit 4. The control circuit 30 is specifically configured to: when the voltage that is at the output end O2 of the second voltage converter 12 and that is detected by the voltage detection circuit 4 is less than the first threshold VA, turn off the second switch module M2, and control the control end of the first switch module M1 based on the output signal of the operational amplifier 211, and when the voltage that is at the output end O2 of the second voltage converter M2 and that is detected by the voltage detection circuit 31 is equal to V1, turn off the first switch module M1, and control the control end of the second switch module M2 based on the output signal of the operational amplifier 211.

In a possible implementation, both the first voltage converter 11 and the second voltage converter 12 are buck converters Buck. In addition, the switch modules, for example, the first switch module M1 and the second switch module M2, may be transistors, one of the first end and the second end of the switch module is a source, the other one of the first end and the second end is a drain, and the control end is a gate. In another possible implementation, the first voltage converter 11 and the second voltage converter 12 may alternatively be boost converters Boost. However, the following embodiments are described by using an example in which the first voltage converter 11 and the second voltage converter 12 are buck converters Buck.

An embodiment of this application further provides a control method of a power supply circuit. As shown in FIG. 3 to FIG. 5, the power supply circuit includes: the first voltage converter 11; the second voltage converter 12; and the first low dropout regulator 21, where the output end of the first low dropout regulator 21 is electrically connected to the first load end L1. As shown in FIG. 7, the control method includes: connecting, based on a power-on state and a power-off state of the second voltage converter 12, one of the output end O1 of the first voltage converter 11 and the output end O2 of the second voltage converter 12 to the first load end L1 through the first low dropout regulator 21.

For a specific structure of the power supply circuit, refer to the descriptions in the foregoing embodiments. For a specific principle and process of the control method, refer to the operating principle and process of the foregoing multiplexing module.

In a possible implementation, a process of connecting, based on a power-on state and a power-off state of the second voltage converter 12, one of the output end O1 of the first voltage converter 11 and the output end O2 of the second voltage converter 12 to the first load end L1 through the first low dropout regulator 21 includes:
when the second voltage converter 12 is in the power-off state, disconnecting the output end O2 of the second voltage converter 12 from the first load end L1 and connecting the output end O1 of the first voltage converter 11 to the first load end L1; and
when the second voltage converter 12 is in the power-on state, connecting the output end O2 of the second voltage converter 12 to the first load end L1 and disconnecting the output end O1 of the first voltage converter 11 from the first load end L1.

In a possible implementation, in a first time period, the first voltage converter 11 is in a power-on state, and the second voltage converter 12 is in the power-on state; and in a second time period, the first voltage converter 11 is in the power-on state, and the second voltage converter 12 is in the power-off state.

In a possible implementation, when the second voltage converter 12 is in the power-on state, an output voltage of the second voltage converter 12 is V1, and an output voltage of the first voltage converter 11 is V2, where V1<V2.

In a possible implementation, a process of disconnecting the output end O2 of the second voltage converter 12 from the first load end L1 and connecting the output end O1 of the first voltage converter 11 to the first load end L1, when the second voltage converter 12 is in the power-off state includes:
when a voltage at the output end O2 of the second voltage converter 12 is less than a first threshold VA, disconnecting the output end O2 of the second voltage converter 12 from the first load end L1 and connecting the output end O1 of the first voltage converter 11 to the first load end L1, where the first threshold VA is less than V1.

In a possible implementation, a process of connecting the output end O2 of the second voltage converter 12 to the first load end L1 and disconnecting the output end O1 of the first voltage converter 11 from the first load end L1, when the second voltage converter 12 is in the power-on state includes:
when the voltage at the output end O2 of the second voltage converter 12 is equal to V1, connecting the output end O2 of the second voltage converter 12 to the first load end L1 and disconnecting the output end O1 of the first voltage converter 11 from the first load end L1, where V1 is greater than the first threshold VA.

In a possible implementation, the connecting the output end O2 of the second voltage converter 12 to the first load end L1 and disconnecting the output end O1 of the first voltage converter 11 from the first load end L1, when the voltage at the output end O2 of the second voltage converter 12 is equal to V1 includes: when the voltage of the output end O2 of the second voltage converter 12 is equal to V1, after preset duration, connecting the output end O2 of the second voltage converter 12 to the first load end L1 and disconnecting the output end O1 of the first voltage converter 11 from the first load end L1.

In a possible implementation, as shown in FIG. 6, the multiplexing module 3 includes: the first switch module M1, where the first end of the first switch module M1 is electrically connected to the output end O1 of the first voltage converter 11, and the second end of the first switch module M1 is electrically connected to the first load end L1; and the second switch module M2, where the first end of the second switch module M2 is electrically connected to the output end O2 of the second voltage converter 12, and the second end of the second switch module M2 is electrically connected to the first load end L1. The first low dropout regulator 21 includes: the operational amplifier 211, where the first input end of the operational amplifier 211 is electrically connected to the reference voltage end VREF, and the second input end of the operational amplifier 211 is electrically connected to the first load end L1 through the feedback circuit FB; and the capacitor C, where the capacitor C is electrically connected to the first load end L1. The multiplexing module 3 further includes the control circuit 30. The control circuit 30 is electrically connected to the control end of the first switch module M1, the control end of the second switch module M2, and the output end of the operational amplifier 211, and the first switch module M1, the second switch module M2, and the control circuit 30 are reused as a part of the first low dropout regulator.

The process of disconnecting the output end O2 of the second voltage converter 12 from the first load end L1 includes: turning off the second switch module M2. A process of disconnecting the output end O1 of the first voltage converter 11 from the first load end L1 includes: turning off the first switch module M1.

An embodiment of this application further provides a power supply circuit, including: a first voltage converter; a second voltage converter; a first low dropout regulator, where an output end of the first low dropout regulator is electrically connected to a first load end; and a multiplexing module, where the multiplexing module is configured to: connect, based on an output current of the first low dropout regulator, one of an output end of the first voltage converter and an output end of the second voltage converter to the first load end through the first low dropout regulator. The multiplexing module may switch a corresponding voltage converter based on the output current of the first low dropout regulator, to supply power to the first load end, to adapt to different scenarios. This improves flexibility of a power supply. The power supply circuit may be the power supply circuit shown in FIG. 3 to FIG. 5. A difference between the power supply circuit in this embodiment and the power supply circuit in the foregoing embodiments lies in that, in this embodiment, switching is performed based on a current instead of a voltage.

In a possible implementation, an output voltage of the first voltage converter is greater than an output voltage of the second voltage converter. The multiplexing module is specifically configured to: connect the output end of the first voltage converter to the first load end when an output current of the first low dropout regulator is less than a first current threshold; and connect the output end of the second voltage converter to the first load end when the output current of the first low dropout regulator is greater than a second current threshold, where the second current threshold is greater than or equal to the first current threshold. Because the first load has a high requirement on quality of the power supply in a case of a small current, and has a low requirement on the quality of the power supply in a case of a large current, when the output current of the first low dropout regulator is small, the first low dropout regulator is switched to be powered by the first voltage converter with a high output voltage, to improve quality of the first low dropout regulator. In this case, the current is small, and overall power consumption is low even if a power supply voltage is high. When the output current of the first low dropout regulator is large, the first low dropout regulator is switched to be powered by the second voltage converter with a low output voltage. Because the requirement on the quality of the power supply is low in the case of the large current, when the requirement on the quality of the power supply in the case of the large current is met, decreasing the power supply voltage can effectively improve power efficiency of the low dropout regulator and reduce power consumption. For a specific structure, refer to FIG. 6 or FIG. 7.

In a possible implementation, the output voltage of the first voltage converter is greater than the output voltage of the second voltage converter. The multiplexing module includes: a first switch module, where a first end of the first switch module is electrically connected to the output end of the first voltage converter, and a second end of the first switch module is electrically connected to the first load end; and a second switch module, where a first end of the second switch module is electrically connected to the output end of the second voltage converter, and a second end of the second switch module is electrically connected to the first load end. The first low dropout regulator includes: an operational amplifier, where a first input end of the operational amplifier is electrically connected to a reference voltage end, and a second input end of the operational amplifier is electrically connected to the first load end through a feedback circuit; and a capacitor, where the capacitor is electrically connected to the first load end. The multiplexing module further includes a control circuit. The control circuit is configured to: turn off the second switch module when the output current of the first low dropout regulator is less than the first current threshold, and turn off the first switch module when the output current of the first low dropout regulator is greater than the second current threshold, where the second current threshold is greater than or equal to the first current threshold.

An embodiment of this application further provides a power supply circuit, including: a first voltage converter; a second voltage converter; a first low dropout regulator, where an output end of the first low dropout regulator is electrically connected to a first load end; and a multiplexing module. Operating time periods of the power supply circuit sequentially include a first time period and a second time period. The multiplexing circuit is configured to: connect an output end of the first voltage converter to the first load end through the first low dropout regulator in the first time period; and connect an output end of the second voltage converter to the first load end through the first low dropout regulator in the second time period. In the first time period, the first voltage converter is in a power-on state, and the second voltage converter is in a power-off state. In the second time period, the first voltage converter is in the power-on state, and the second voltage converter is in a power-on state. If a load connected to the first load end needs to be powered on before a load powered by the second voltage converter, but the second voltage converter needs to supply power to the load connected to the first load end due to another reason, in a power-on process of a power supply, the first low dropout regulator may be first switched to be powered by the powered-on first voltage converter, and after the second voltage converter is powered on, the first low dropout regulator is switched to be powered by the second voltage converter. The power supply circuit may be the power supply circuit shown in FIG. 3 to FIG. 5. A difference between the power supply circuit in this embodiment and the power supply circuit in the foregoing embodiments lies in that, in this embodiment, switching is performed based on timing instead of a voltage or a current.

In a possible implementation, the multiplexing module includes: a first switch module, where a first end of the first switch module is electrically connected to the output end of the first voltage converter, and a second end of the first switch module is electrically connected to the first load end; and a second switch module, where a first end of the second switch module is electrically connected to the output end of the second voltage converter, and a second end of the second switch module is electrically connected to the first load end. The first low dropout regulator includes: an operational amplifier, where a first input end of the operational amplifier is electrically connected to a reference voltage end, and a second input end of the operational amplifier is electrically connected to the first load end through a feedback circuit; and a capacitor, where the capacitor is electrically connected to the first load end. The multiplexing module further includes a control circuit. The control circuit is configured to: turn off the second switch module in the first time period, and turn off the first switch module in the second time period. For a specific structure, refer to FIG. 6 or FIG. 7.

An embodiment of this application further provides a chip, including a memory and a memory, and may further include an interface circuit and the power supply circuit according to any one of the foregoing embodiments. The memory is configured to store computer program instructions to implement the method according to any one of the foregoing embodiments. The interface circuit is configured to implement a connection between a circuit in the chip and an external circuit outside the chip. A specific structure and an operating process of the power supply circuit are the same as those in the foregoing embodiments. Details are not described herein again. When the computer program instructions stored in the memory are executed by a multiplexing module, the chip is triggered to perform the control method of a power supply circuit in the foregoing embodiment. It should be noted that the load in the foregoing embodiments may be a load on the chip, or may be a load outside the chip. When the load is located outside the chip, the load needs to be connected to a corresponding load end in the chip by using a circuit, to drive the load by using the power supply circuit in the chip.

An embodiment of this application further provides an electronic device, including the power supply circuit according to any one of the foregoing embodiments. A specific operating principle and process of the electronic device may be the same as those in the foregoing embodiments. Details are not described herein again. The electronic device may be any electronic device that needs to be powered by a power supply circuit.

An embodiment of this application further provides a computer-readable storage medium. The computer-readable storage medium stores program code. When the program code is executed by a processor, the method according to any one of the foregoing embodiments is implemented.

In embodiments of this application, "at least one" means one or more, and "a plurality of" means two or more. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these terms, including any combination of single or plural terms. For example, at least one of a, b, and c may represent: a, b, c, a-b, a-c, b-c, or a-b-c, where a, b, and c may be one or more.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A power supply circuit, comprising:
a first voltage converter;
a second voltage converter;
a first low dropout regulator, wherein an output end of the first low dropout regulator is electrically connected to a first load end; and
a multiplexing module, wherein the multiplexing module is configured to connect, based on a power-on state and a power-off state of the second voltage converter, one of an output end of the first voltage converter and an output end of the second voltage converter to the first load end through the first low dropout regulator.

2. The power supply circuit according to claim 1, wherein
the multiplexing module is specifically configured to: when the second voltage converter is in the power-off state, disconnect the output end of the second voltage converter from the first load end and connect the output end of the first voltage converter to the first load end; and
the multiplexing module is further specifically configured to: when the second voltage converter is in the power-on state, connect the output end of the second voltage converter to the first load end and disconnect the output end of the first voltage converter from the first load end.

3. The power supply circuit according to claim 2, wherein
in a first time period, the first voltage converter is in a power-on state, and the second voltage converter is in the power-on state; and
in a second time period, the first voltage converter is in the power-on state, and the second voltage converter is in the power-off state.

4. The power supply circuit according to claim 2 or 3, wherein
when the second voltage converter is in the power-on state, an output voltage of the second voltage converter is V1, and an output voltage of the first voltage converter is V2, wherein V1<V2.

5. The power supply circuit according to any one of claims 1 to 4, wherein
the multiplexing module comprises:
a first switch module, wherein a first end of the first switch module is electrically connected to the output end of the first voltage converter, and a second end of the first switch module is electrically connected to the first load end;
a second switch module, wherein a first end of the second switch module is electrically connected to the output end of the second voltage converter, and a second end of the second switch module is electrically connected to the first load end; and
a control circuit, wherein the control circuit is configured to: turn off the first switch module when the second voltage converter is in the power-on state, and turn off the second switch module when the second voltage converter is in the power-off state.

6. The power supply circuit according to claim 5, wherein
the multiplexing module and the first low dropout regulator are integrated into one chip, and the control circuit of the multiplexing module is reused as a control circuit of the first low dropout regulator.

7. The power supply circuit according to any one of claims 1 to 4, wherein
the multiplexing module comprises:
a first switch module, wherein the first switch module is connected in series between an input end of the first low dropout regulator and the output end of the first voltage converter; and
a second switch module, wherein the second switch module is connected in series between the input end of the first low dropout regulator and the output end of the second voltage converter; and
the multiplexing module is specifically configured to: when the second voltage converter is in the power-on state, turn off the first switch module and turn on the second switch module; and when the second voltage converter is in the power-off state, turn off the second switch module and turn on the first switch module.

8. The power supply circuit according to any one of claims 5 to 7, wherein
the turning off the second switch module when the second voltage converter is in the power-off state comprises:
turning off the second switch module when a voltage at the output end of the second voltage converter is less than a first threshold, wherein the first threshold is less than V1, and V1 is the output voltage of the second voltage converter when the second voltage converter is in the power-on state.

9. The power supply circuit according to claim 8, wherein
the turning off the first switch module when the second voltage converter is in the power-on state comprises:
turning off the first switch module when the voltage at the output end of the second voltage converter is equal to V1.

10. The power supply circuit according to claim 9, wherein
the turning off the first switch module when the voltage at the output end of the second voltage converter is equal to V1 comprises:
when the voltage at the output end of the second voltage converter is equal to V1, turning off the first switch module after preset duration.

11. The power supply circuit according to claim 9, further comprising:
a voltage detection circuit, wherein the voltage detection circuit is configured to detect the voltage at the output end of the second voltage converter, wherein
the control circuit is electrically connected to the voltage detection circuit; and
the control circuit is specifically configured to: turn off the second switch module when the voltage that is at the output end of the second voltage converter and that is detected by the voltage detection circuit is less than the first threshold, and turn off the first switch module when the voltage that is at the output end of the second voltage converter and that is detected by the voltage detection circuit is equal to V1.

12. The power supply circuit according to any one of claims 1 to 11, further comprising:
a second load end, wherein the second load end is electrically connected to the output end of the second voltage converter;
a third low dropout regulator, wherein an input end of the third low dropout regulator is electrically connected to the output end of the first voltage converter, and an output end of the third low dropout regulator is electrically connected to a third load end; and
a fourth low dropout regulator, wherein an input end of the fourth low dropout regulator is electrically connected to the output end of the second voltage converter, and an output end of the fourth low dropout regulator is electrically connected to a fourth load end.

13. The power supply circuit according to any one of claims 1 to 12, wherein
both the first voltage converter and the second voltage converter are buck converters.

14. A control method for a power supply circuit, wherein
the power supply circuit comprises:
a first voltage converter;
a second voltage converter; and
a first low dropout regulator, wherein an output end of the first low dropout regulator is electrically connected to a first load end; and
the control method comprises:
connecting, based on a power-on state and a power-off state of the second voltage converter, one of an output end of the first voltage converter and an output end of the second voltage converter to the first load end through the first low dropout regulator.

15. The method according to claim 14, wherein
the connecting, based on a power-on state and a power-off state of the second voltage converter, one of an output end of the first voltage converter and an output end of the second voltage converter to the first load end through the first low dropout regulator comprises:
when the second voltage converter is in the power-off state, disconnecting the second voltage converter from the first load end and connecting the output end of the first voltage converter to the first load end; and
when the second voltage converter is in the power-on state, connecting the output end of the second voltage converter to the first load end and disconnecting the output end of the first voltage converter from the first load end.

16. The method according to claim 15, wherein
in a first time period, the first voltage converter is in a power-on state, and the second voltage converter is in the power-on state; and
in a second time period, the first voltage converter is in the power-on state, and the second voltage converter is in the power-off state.

17. The method according to claim 15 or 16, wherein
when the second voltage converter is in the power-on state, an output voltage of the second voltage converter is V1, and an output voltage of the first voltage converter is V2, wherein V1<V2.

18. The method according to claim 17, wherein
the disconnecting the output end of the second voltage converter from the first load end and connecting the output end of the first voltage converter to the first load end, when the second voltage converter is in the power-off state comprises:
when a voltage at the output end of the second voltage converter is less than a first threshold, disconnecting the output end of the second voltage converter from the first load end and connecting the output end of the first voltage converter to the first load end, wherein the first threshold is less than V1.

19. The method according to claim 18, wherein
the connecting the output end of the second voltage converter to the first load end and disconnecting the output end of the first voltage converter from the first load end, when the second voltage converter is in the power-on state comprises:
when the voltage at the output end of the second voltage converter is equal to V1, connecting the output end of the second voltage converter to the first load end and disconnecting the output end of the first voltage converter from the first load end, wherein V1 is greater than the first threshold.

20. The method according to claim 19, wherein
the connecting the output end of the second voltage converter to the first load end and disconnecting the output end of the first voltage converter from the first load end, when the voltage at the output end of the second voltage converter is equal to V1 comprises:
when the voltage at the output end of the second voltage converter is equal to V1, after preset duration, connecting the output end of the second voltage converter to the first load end and disconnecting the output end of the first voltage converter from the first load end.

21. The method according to any one of claims 14 to 20, wherein
the power supply circuit further comprises:
a first switch module, wherein a first end of the first switch module is electrically connected to the output end of the first voltage converter, and a second end of the first switch module is electrically connected to the first load end; and
a second switch module, wherein a first end of the second switch module is electrically connected to the output end of the second voltage converter, and a second end of the second switch module is electrically connected to the first load end;
a process of disconnecting the output end of the second voltage converter from the first load end comprises: turning off the second switch module; and
a process of disconnecting the output end of the first voltage converter from the first load end comprises: turning off the first switch module.

22. A chip, comprising a processor and a memory, wherein the memory is configured to store program instructions, and the processor is configured to execute the program instructions in the memory, to implement the method according to any one of claims 14 to 21.

23. An electronic device, comprising the power supply circuit according to any one of claims 1 to 13.

24. A computer-readable storage medium, wherein
the computer-readable storage medium stores program code, and when the program code is executed by a processor, the method according to any one of claims 14 to 21 is implemented.
